(19) **Europäisches Patentamt**

**European Patent Office**

**Office européen des brevets**

(11) **EP 1 252 978 B1**

(12) **FASCICULE DE BREVET EUROPEEN**

(45) Date de publication et mention
de la délivrance du brevet:
**03.03.2004   Bulletin 2004/10**

(51) Int Cl.⁷: **B25G 3/30**

(21) Numéro de dépôt: **02358011.1**

(22) Date de dépôt: **27.05.2002**

(54) **Douille polyvalente pour assemblage d'un manche sur un instrument ménager**

Multifunktionale Hülse zum Befestigen eines Stieles an ein Reinigungsgerät

Adaptor sleeve for attaching a handle to a cleaning instrument

(84) Etats contractants désignés:
**BE DE ES FR IT PT**

(30) Priorité: **08.06.2001  FR 0107494**

(43) Date de publication de la demande:
**30.10.2002   Bulletin 2002/44**

(73) Titulaire: **Rozenblit**
**84000 Avignon (FR)**

(72) Inventeurs:
  • **Rozenblit, Maurice**
**84000 Avignon (FR)**

  • **Rozenblit, Charles**
**84000 Avignon (FR)**

(74) Mandataire: **Domange, Maxime et al**
**Cabinet Beau de Lomenie,**
**232, avenue du Prado**
**13295 Marseille Cedex 08 (FR)**

(56) Documents cités:
**DE-B- 1 166 146          FR-A- 1 100 498**
**GB-A- 672 946            US-A- 3 499 666**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 252 978 B1

# EP 1 252 978 B1

**Description**

La présente invention concerne une douille polyvalente telle que définie dans la revendication 1 servant à assembler un manche sur un instrument ménager.

La douille selon l'invention s'applique plus particulièrement à des instruments de nettoyage de type balai, lave pont, raclette etc...

On entend ici par « douille polyvalente » que l'on peut y adapter au moins deux manches présentant des extrémités de formes géométriques différentes, notamment les extrémités présentant un filetage de surface d'enveloppe cylindrique ou conique.

Il est connu de fournir des brosses à balai (voir, par exemple, le document FR-A-1 100 498), ou plus généralement des instruments ménagers présentant un manche et dans lesquels le manche présente une extrémité à surface filetée adaptable par vissage dans une douille à surface interne filetée complémentaire d'une pièce-support de la partie fonctionnelle de l'instrument, notamment une pièce support de type semelle, supportant les poils d'une brosse à balai ou une raclette en matériau plastique pour le nettoyage des surfaces vitrées.

On connaît par ailleurs différentes tailles standard, notamment de diamètres différents de manche pour instruments ménagers, plus particulièrement pour balais brosses.

En particulier, pour les balais, les diamètres ont des dimensions standards au niveau mondial. Dans chaque pays, on adopte un filetage standard identique pour les différents diamètres. Il existe cependant actuellement au niveau européen et mondial des filetages standard, dont les caractéristiques sont différentes selon les zones de pays. On distingue en effet quatre grandes zones :

- filetage français,
- filetage italien (en fait Europe du sud, avec Espagne et Portugal),
- filetage allemand (en fait pays d'Europe du nord),
- filetage américain.

Ces filetages se distinguent par des caractéristiques dimensionnelles moyennes différentes, dont un exemple illustratif est fourni ci-après.

En général, le filetage s'inscrit dans une enveloppe dont la surface de révolution est légèrement conique pour permettre une introduction aisée du manche et un blocage par serrage en fin de course.

Le but de la présente invention est de pouvoir assembler des manches d'une ou plusieurs de ces zones sur un seul et même support.

L'invention consiste essentiellement à réaliser soit une cavité dans un support, soit une douille destinée à être adaptée sur un support, ladite cavité présentant une superposition de deux zones ou plus, dont les filetages sont différents et permettent de pouvoir visser des manches de filetages différents.

Par « filetage différent », on entend que l'une des caractéristiques dimensionnelles, tel que le diamètre de la surface d'enveloppe, ou la hauteur du pas de vis, ou encore la conicité, sont différentes.

On entend ici par « conicité différente » un angle différent par rapport à la verticale de la génératrice dudit cône.

La présente invention fournit une douille polyvalente servant à assembler respectivement au moins deux manches de filetages différents sur un instrument ménager, ladite douille comprenant un corps présentant une cavité comprenant une ouverture dans laquelle on peut adapter un manche et ladite cavité comprenant au moins deux zones superposées, chaque zone comprenant un filetage apte à coopérer avec l'extrémité de l'un de ces manches introduit dans ladite cavité par ladite ouverture, ledit filetage de chaque zone étant différent et s'inscrivant dans une enveloppe cylindrique ou légèrement conique dont le diamètre est identique ou de préférence décroissant dans les différentes zones successives depuis ladite ouverture.

Dans un mode de réalisation particulier, ladite cavité comprend deux zones superposées, chaque zone présentant un filetage avec une surface d'enveloppe légèrement conique, dont le diamètre est différent dans les deux zones et la conicité du filetage inférieur étant de préférence plus grande que celle du filetage supérieur.

De préférence, le pas de vis de chacun desdits filetages constituant chacune des surfaces de révolution dans les différentes zones est d'une hauteur différente. Il peut être en effet souhaitable d'augmenter le pas de vis lorsque le diamètre du filetage diminue.

Selon une première variante de réalisation, ledit corps comprenant une cavité dans laquelle on peut adapter au moins un manche est compris dans ledit instrument ménager.

Selon une seconde variante de réalisation, ledit corps, est indépendant dudit instrument ménager et adaptable sur celui-ci pour y assembler l'un desdits manches.

Dans cette seconde variante de réalisation, plus particulièrement, ledit corps présente une surface externe en forme de manchon, adaptable dans une seconde cavité de forme complémentaire comprise dans ledit instrument.

Dans cette seconde variante de réalisation, avantageusement, ladite surface externe forme un filetage apte à coopérer avec un filetage complémentaire réalisé dans ladite seconde cavité dudit instrument.

Une douille selon l'invention est particulièrement utile lorsque ledit instrument est constitué par une pièce support de poils d'une brosse à balai, ou ledit instrument est constitué par une pièce support de raclette(s) en matériau plastique souple destinée(s) au lavage de surfaces vitrées.

La présente invention fournit donc également un procédé d'assemblage tel que défini dans la revendication 10.

D'autres caractéristiques et avantages de la présente invention apparaîtront à la lumière de la description détaillée faite en référence aux figures 1 à 3, dans laquelle la figure 1 représente une douille indépendante et polyvalente selon l'invention.

La figure 2 représente la douille de la figure 1 en coupe partielle centrale.

La figure 3 représente la surface interne d'une cavité à l'intérieur de la douille représentée sur la figure 2.

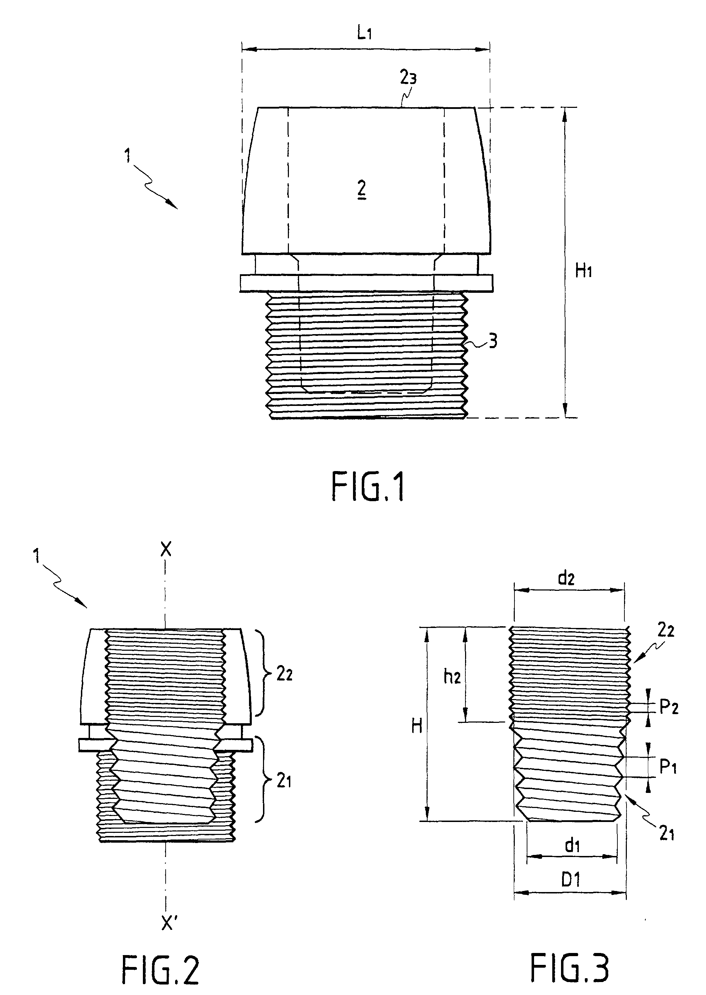

La douille 1 représentée sur les figures 1 à 3 constitue une pièce indépendante adaptable sur divers instruments, notamment sur la semelle support de poils d'une brosse balai (non représentée).

La douille 1 est adaptable sur un instrument ménager par vissage de sa partie inférieure en forme de manchon dont la surface externe 3 comprend un filetage d'enveloppe légèrement conique. La douille 1 est adaptable par vissage sur un instrument présentant une cavité ouverte présentant une surface interne en forme de filetage complémentaire (non représentée) au filetage de la surface externe 3 de la douille 1 présente une hauteur $H_1$ = 44 mm et une largeur générale $L_1$ = 35 mm. La douille est creuse et définit une cavité 2 ouverte dans sa partie supérieure. La surface interne de la cavité 2 est filetée, de sorte qu'un manche à balais présentant un filetage externe à son extrémité peut être adapté par vissage dans ladite cavité ouverte 2.

Sur la figure 2, on a fait apparaître les deux zones $2_1$, $2_2$ superposées et juxtaposées constitutives de la surface interne de la cavité 2 ouverte à l'intérieur de la douille. Ces deux surfaces filetées sont d'enveloppes légèrement coniques de diamètres différents et de pas de vis également différents.

La zone supérieure $2_2$ comprend nécessairement un diamètre au fond du filetage et un diamètre extérieur supérieurs respectivement au diamètre au fond du filetage et au diamètre extérieur de la zone inférieure $2_1$. En outre, et plus particulièrement, le diamètre au fond du filetage à l'extrémité inférieure de la zone supérieure $2_2$ est sensiblement égal au diamètre extérieur du filetage à l'extrémité supérieure de la zone inférieure $2_1$ : il est représenté par le paramètre $D_1$ sur la figure 3.

En outre, avantageusement, la conicité et le pas de vis de la zone supérieure $2_2$ sont inférieurs à la conicité et au pas de vis de la zone inférieure $2_1$. Afin de garantir une bonne tenue du manche intérieur de la douille 1, le pas de vis $p_2$ de la zone supérieure $2_2$ est inférieur à celui $p_1$ de la zone inférieure $2_1$.

A titre purement illustratif et non limitatif, on a indiqué sur la figure 3 les différentes valeurs des hauteurs, diamètres et pas de vis des deux zones 2i (i = 1 ou 2), à savoir :

- $d_i$ = diamètre du fond de filetage de la zone 2i
- $p_i$ = hauteur pas de vis de la zone 2i
- $h_i$, = hauteur *du filetage de la zone* 2i
-

$$H = h1 + h2$$

- $d_2$ = 22,9 mm (valeur du diamètre à l'extrémité supérieure de la zone supérieure $2_2$)
- $p_2$ = 2 mm
- $h_2$ = 22,1 mm
- $D_1$ = 21,9 mm (valeur du diamètre à l'extrémité supérieure de la zone inférieure $2_1$)
- $H$ = 40 mm
- $d_1$ = 18,1 mm (valeur du diamètre à l'extrémité inférieure de la zone inférieure $2_1$)
- $p_1$ = 4 mm

Ces deux filetages présentent l'avantage d'être compatibles avec les différents filetages standards des manches à balai dans les quatre zones géographiques ci-après citées. En effet, le filetage supérieur est compatible avec le filetage France et Allemagne, et le filetage inférieur qui a une plus grande conicité est compatible avec les filetages Italie et USA.

- D = diamètre extérieur du filetage (mm),
- d = diamètre au fond du filetage (mm),
- h = hauteur (mm),
- $p$ = pas de vis (mm).

Pour D et d, on mentionne ci-après les deux valeurs extrêmes pour les filetages coniques.

| France : | | Allemagne : | |
|---|---|---|---|
| - D = de 23,7 à 22,7 (conicité), | | - D = 24,7 à 22 (conicité), | |
| - d = 22,7 à 21,7 (conicité), | | - d = 22,7 à 20 (conicité), | |
| - h = 24 (variable), | | - h = 20 (variable), | |
| - $p$ = 2. | | - $p$ = 2 | |
| Italie : | | USA: | |
| - D = 21 à 19 (conicité), | | - D = 18,3, | |
| - d = 19 à 17 (conicité), | | - d = 14,7, | |
| - h = 22 (variable), | | - h = 21, | |
| - $p$ = 4. | | - $p$ = 4. | |

Pour la France, l'Allemagne et l'Italie, les valeurs de D1 et d mentionnées sont les valeur à chaque extrémité.

Pour l'Allemagne, les caractéristiques dimensionnelles sont sensiblement identiques à celles de la France, mais avec une conicité plus grande.

Pour les USA, les caractéristiques dimensionnelles sont sensiblement identiques à celles de l'Italie, mais avec une conicité plus grande.

La douille selon l'invention présente donc l'avantage de rendre universels tous les supports ou semelles des instruments de ménage sur lesquels elle est adaptée. Cela permet au niveau industriel et au niveau des distributeurs de constituer un seul stock, améliorant ainsi la productivité et la logistique. D'autre part, cela permet au niveau du consommateur de pouvoir changer un manche sans se soucier de la correspondance de son pas de vis avec celui du support.

**Revendications**

1.  Douille polyvalente servant à assembler respectivement au moins deux manches de filetages différents sur un instrument ménager, ladite douille comprenant un corps (1) présentant une cavité (2), ladite cavité comprenant une ouverture ($2_3$) et au moins deux zones superposées ($2_1$, $2_2$), chaque zone comprenant un filetage apte à coopérer avec l'extrémité de l'un de ces manches introduit dans la cavité par ladite ouverture, ledit filetage de chaque zone étant différent et s'inscrivant dans une enveloppe cylindrique ou légèrement conique à section circulaire dont le diamètre est identique ou de préférence décroissant dans les différentes zones successives depuis ladite ouverture ($2_3$).

2.  Douille polyvalente selon la revendication 1, **caractérisée en ce que** ladite cavité comprend deux zones superposées, chaque zone présentant un filetage avec une surface d'enveloppe légèrement conique dont le diamètre est différent dans les deux zones, la conicité du filetage inférieur étant de préférence plus grande que celle du filetage supérieur.

3.  Douille polyvalente selon la revendication 1 ou 2, **caractérisée en ce que** le pas de vis de chacun desdits filetages constituant chacune des surfaces de révolution des différentes zones est d'une hauteur différente.

4.  Douille selon l'une des revendications 1 à 3, **caractérisée en ce que** ledit corps (1) est compris dans ledit instrument ménager.

5.  Douille selon l'une des revendications 1 à 3, **caractérisée en ce que** ledit corps est indépendant dudit instrument ménager et adaptable sur celui-ci pour y assembler l'un desdits manches.

6.  Douille selon la revendication 5, **caractérisée en ce que** ledit corps présente une surface externe (3) en forme de manchon, adaptable dans une seconde cavité de forme complémentaire comprise dans ledit instrument.

7.  Douille selon la revendication 6, **caractérisée en ce que** ladite surface externe (3) forme un filetage apte à coopérer avec un filetage complémentaire réalisé dans ladite seconde cavité dudit instrument.

8.  Douille polyvalente selon l'une des revendications 1 à 7, **caractérisée en ce que** ledit instrument est constitué par une pièce support de poils d'une brosse à balai.

9.  Douille polyvalente selon l'une des revendications 1 à 7, **caractérisée en ce que** ledit instrument est constitué par une pièce support de raclette(s) en matériau plastique souple destinée(s) au lavage de surfaces vitrées.

10. Procédé d'assemblage respectivement d'au moins deux manches de filetages différents sur un instrument ménager, qui consiste à assembler alternativement par vissage l'un de ces manches sur l'instrument ménager par l'intermédiaire d'une douille intercalaire selon l'une quelconque des revendications 1 à 9, chaque manche présentant à l'une de ses extrémités un filetage de forme complémentaire au filetage de l'une desdites zones superposées de ladite douille polyvalente.

**Patentansprüche**

1.  Mehrzweck-Hülse, die dazu dient, jeweils wenigstens zwei Stiele mit unterschiedlichen Gewinden an ein Haushaltsgerät anzusetzen, wobei die Hülse einen Körper (1) mit einem Hohlraum (2) aufweist, der eine Öffnung ($2_3$) und wenigstens zwei übereinander angeordnete Bereiche ($2_1$, $2_2$) aufweist, wobei jeder Bereich ein Gewinde hat, das mit dem Ende eines der Stiele zusammenzuwirken vermag, das durch die Öffnung in den Hohlraum eingeführt ist, wobei das Gewinde eines jeden Bereichs unterschiedlich ist und sich in eine zylindrische oder leicht konische Umhüllende mit rundem Querschnitt einschreibt, deren Durchmesser ausgehend von der Öffnung ($2_3$) in den un-terschiedlichen aufeinanderfolgenden Bereichen gleich oder vorzugsweise abnehmend ist.

2.  Mehrzweck-Hülse nach Anspruch 1,
    **dadurch gekennzeichnet, dass** der Hohlraum zwei übereinander liegende Bereiche umfasst, wobei jeder Bereich ein Gewinde mit einer leicht konischen Umhüllungsfläche aufweist, deren Durchmesser in den zwei Bereichen unterschiedlich ist, wobei die Konizität des unteren Gewindes vorzugsweise größer ist als die des oberen Gewindes.

3.  Mehrzweck-Hülse nach Anspruch 1 oder 2,
    **dadurch gekennzeichnet, dass** die Gewindesteigung eines jeden Gewindes, das jede der Rotationsflächen der unterschiedlichen Bereiche bildet, eine unterschiedliche Höhe hat.

4.  Hülse nach einem der Ansprüche 1 bis 3,
    **dadurch gekennzeichnet, dass** der Körper (1) in dem Haushaltsgerät enthalten ist.

5.  Hülse nach einem der Ansprüche 1 bis 3,
    **dadurch gekennzeichnet, dass** der Körper von dem Haushaltsgerät separat und an dieses ansetzbar ist, um einen der Stiele anzubauen.

6.  Hülse nach Anspruch 5,
    **dadurch gekennzeichnet, dass** der Körper eine muffenförmige Außenfläche (3) aufweist, die in einen zweiten in dem Gerät enthaltenen Hohlraum mit dazu komplementärer Form einpassbar ist.

7.  Hülse nach Anspruch 6,
    **dadurch gekennzeichnet, dass** die Außenfläche (3) ein Gewinde bildet, das mit einem komplementären Gewinde zusammenzuwirken vermag, welches in dem zweiten Hohlraum des Geräts ausgeführt ist.

8.  Mehrzweck-Hülse nach einem der Ansprüche 1 bis 7,
    **dadurch gekennzeichnet, dass** das Haushaltsgerät von einem die Haare eines Besenkopfs tragenden Teil gebildet ist.

9.  Mehrzweck-Hülse nach einem der Ansprüche 1 bis 7,
    **dadurch gekennzeichnet, dass** das Gerät von einem ein Wischblatt oder Wischblätter aus weichem Kunststoff zum Reinigen von Glasscheiben tragenden Teil gebildet ist.

10. Verfahren zum Ansetzen von jeweils wenigstens zwei Stielen mit unterschiedlichen Gewinden an einem Haushaltsgerät, das darin besteht, wechselweise einen der Stiele mittels einer dazwischengeschobenen Hülse nach einem der Ansprüche 1 bis 9 durch Verschrauben an dem Haushaltsgerät anzubauen, wobei jeder Stiel an einem seiner Enden ein Gewinde aufweist, dessen Form komplementär zu dem Gewinde eines der übereinander angeordneten Bereiche der Mehrzweck-Hülse ist.

## Claims

1. A general-purpose bushing for assembling one of at least two handles having respective different threads to a household instrument, said bushing comprising a body (1) presenting a cavity (2), said cavity having an opening ($2_3$) and at least two superposed zones ($2_1$, $2_2$), each zone having a thread that is suitable for co-operating with the end of one of the handles inserted into the cavity via said opening, said thread in each zone being different and being inscribed within a cylindrical or slightly conical envelope of circular section with a diameter that is identical or preferably decreasing between different successive zones going away from said opening ($2_3$).

2. A general-purpose bushing according to claim 1, **characterized in that** said cavity comprises two superposed zones, each zone presenting a thread with an envelope surface that is slightly conical and of diameter that differs in the two zones, the conicity of the lower thread preferably being greater than the conicity of the upper thread.

3. A general-purpose bushing according to claim 1 or claim 2, **characterized in that** the screw pitch of each of said threads constituting each of the surfaces of revolution of the various zones is of a different height.

4. A bushing according to any one of claims 1 to 3, **characterized in that** said body (1) is included in said household instrument.

5. A bushing according to any one of claims 1 to 3, **characterized in that** said body is independent of said household instrument and can be fitted thereto in order to assemble one of said handles thereto.

6. A bushing according to claim 5, **characterized in that** said body presents a sleeve-shaped outer surface (3) suitable for fitting in a second cavity of complementary shape include in said instrument.

7. A bushing according to claim 6, **characterized in that** said outer surface (3) forms a thread suitable for co-operating with a complementary thread formed in said second cavity of said instrument.

8. A general-purpose bushing according to any one of claims 1 to 7, **characterized in that** said instrument is constituted by a bristle-supporting piece of a broom head.

9. A general-purpose bushing according to any one of claims 1 to 7, **characterized in that** said instrument is constituted by a support piece for one or more wiper blades of flexible plastics material for cleaning glazed surfaces.

10. A method of assembling one or other of at least two handles of different respective threads to a household instrument, the method consisting in screwing one of said handles to the household instrument via an intermediate bushing in accordance with any one of claims 1 to 9, each handle presenting at one of its ends a thread that is complementary in shape to the thread of one of said superposed zones of said general-purpose bushing.

FIG.1

FIG.2

FIG.3